# EUROPÄISCHE PATENTSCHRIFT

(11) **EP 2 659 165 B1**
(45) Veröffentlichungstag und Bekanntmachung des Hinweises auf die Patenterteilung: **08.10.2014**
(21) Anmeldenummer: 11833600.7
(22) Anmeldetag: 20.12.2011
(51) Int. Cl.: F16H 47/04

(54) **LEISTUNGSVERZWEIGUNGSGETRIEBE**
POWER SPLIT GEARBOX
TRANSMISSION À DÉRIVATION DE PUISSANCE

(30) Priorität: 30.12.2010 DE 102010056474; 21.05.2011 DE 102011102210
(43) Veröffentlichungstag der Anmeldung: 06.11.2013
(73) Patentinhaber: Hytrac GmbH, 45139 Essen (DE)
(72) Erfinder: TOLKSDORF, Detlef, 45141 Essen (DE)
(74) Vertreter: Döpp, Ludger
(86) Internationale Anmeldenummer: PCT/DE2011/002148
(87) Internationale Veröffentlichungsnummer: WO 2012/089192

(56) Entgegenhaltungen:
- WO-A2-2009/071060
- DE-A1- 19 747 459
- JP-A- 5 044 816
- JP-A- 49 120 075
- JP-A- 2005 114 128
- SU-A1- 1 504 113

## Beschreibung

Die Erfindung betrifft ein hydrostatisch mechanisches Leistungsverzweigungsgetriebe gemäß gattungsbildendem Teil des ersten Patentanspruchs.

Ein hydrostatisch mechanisches Leistungsverzweigungsgetriebe wird beispielsweise in der DE 10 2004 001 929 A1 beschrieben. Vorgeschlagen wird ein Leistungsverzweigungsgetriebe mit stufenlos veränderlichem Übersetzungsverhältnis, das einen hydrostatischen Getriebeteil, bestehend aus einer ersten Hydrostateinheit mit verstellbarem Volumen und einer zweiten Hydrostateinheit mit konstantem Volumen und einem mechanischen Getriebeteil, umfassend ein Summierungsgetriebe und ein Bereichsgetriebe aufweist, bei dem das Summierungsgetriebe und das Bereichsgetriebe achsversetzt zu den Hydrostateinheiten angeordnet sind.

Die SU 1504113 A1 offenbart ein hydrostatisch mechanisches Leitungsverzweigungsgetriebe, beinhaltend ein Gehäuse, mindestens einen, aus mindestens einer Hydraulikpumpe und mindestens einem Hydraulikmotor bestehenden ersten Leistungszweig, mindestens eine innerhalb des Gehäuses angeordnete von mindestens einem Antriebsmotor, insbesondere einer Brennkraftmaschine als weiteren Leistungszweig, mittel- oder unmittelbar antreibbare Antriebswelle, die über Zahnradelemente verfügt, wobei die Zahnradelemente über mindestens eine Kupplung wahlweise entweder mittel- oder unmittelbar auf ein Sonnenrad eines Planetengetriebes wirken und die Antriebswelle vom Planetengetriebe entkoppelt werden kann, wobei das Planetengetriebe abhängig vom jeweiligen Betriebszustand des Leistungsverzweigungsgetriebes über weitere Kupplungen bedarfsweise in einen Zwanglauf schaltbar ist, und wobei der Hydraulikmotor wahlweise auf ein Hohlrad des Planetengetriebes koppelbar ist.

Die JP 5044816 A betrifft ein hydrostatisch mechanisches Leitungsverzweigungsgetriebe, beinhaltend ein Gehäuse, mindestens einen, aus mindestens einer Hydraulikpumpe und mindestens einem Hydraulikmotor bestehenden ersten Leistungszweig, mindestens eine innerhalb des Gehäuses angeordnete von mindestens einem Antriebsmotor, insbesondere einer Brennkraftmaschine als weiteren Leistungszweig, mittel- oder unmittelbar antreibbare Antriebswelle, die über Zahnradelemente verfügt, wobei die Zahnradelemente über mindestens eine Kupplung wahlweise entweder mittel- oder unmittelbar auf ein Sonnenrad eines Planetengetriebes wirken und die Antriebswelle vom Planetengetriebe entkoppelt werden kann, wobei das Planetengetriebe abhängig vom jeweiligen Betriebszustand des Leistungsverzweigungsgetriebes über weitere Kupplungen bedarfsweise in einen Zwanglauf schaltbar ist, wobei der Hydraulikmotor wahlweise durch eine Kupplung auf das Sonnenrad koppelbar ist.

Ein weiteres hydrostatisch mechanisches Leitungsverzweigungsgetriebe ist in der gattungsgemäßen WO 2009/071060 A2 beschrieben, bestehend aus einem Gehäuse, respektive einem aus einzelnen Gehäuseteilen zusammengesetztem Gehäuse, mindestens eine innerhalb des Gehäuses angeordnete von mindestens einem Antriebsmotor, insbesondere einer Brennkraftmaschine, antreibbare Antriebswelle, die über Zahnradelemente, nach Art eines Pumpenverteilergetriebes, auf mindestens zwei Hydropumpen einwirkt und über mindestens ein weiteres Zahnrad verfügt, das mittel- oder unmittelbar auf ein Abtriebselement eines Lastschaltgetriebes einwirkt, wobei zumindest im Bereich des Zahnrades mindestens ein Kupplungselement positioniert ist, und wobei das Lastschaltgetriebe zumindest eine über mindestens eine, im hydrostatischen Kreislauf antreibbare Welle verfügt, im Bereich derer Kupplungen, Bremsen, Bauteile eines einstufigen Planetengetriebes und dergleichen Bauteile vorgesehen sind, wobei das Abtriebselement des Lastschaltgetriebes auf mindestens eine Ausgangswelle geschaltet ist. Ziel des Erfindungsgegenstandes ist es, ein alternatives hydrostatisch mechanisches Leistungsverzweigungsgetriebe bereit zu stellen, das geeignet ist, Verbrennungsmotoren drehzahloptimiert zu betreiben und gleichzeitig verbesserte Wirkungsgrade dadurch zu erzielen, dass in unterschiedlichen Betriebszuständen jeweils über Kupplungen diejenigen Antriebselemente aktiviert werden, die eine optimale Wirkungsgradbilanz begründen und indem über Kupplungen solche Antriebselemente abgeschaltet und in Stillstand versetzt werden, die in bestimmten Betriebsbereichen funktionell nicht eingesetzt werden, aber den Gesamtwirkungsgrad, z.B. durch Schleppverlust von Hydraulikmotoren, verschlechtern könnten.

Dieses Ziel wird dadurch erreicht, dass die Zahnradelemente über mindestens eine erste Kupplung wahlweise entweder mittel- oder unmittelbar auf ein Sonnenrad eines Planetengetriebes wirken, wobei die Antriebswelle vom Planetengetriebe entkoppelt werden kann, wobei das Planetengetriebe abhängig vom jeweiligen Betriebszustand des Leistungsverzweigungsgetriebes über weitere Kupplungen in einen Zwanglauf schaltbar ist, und wobei der Hydraulikmotor wahlweise über eine zweite Kupplung auf das Sonnenrad und wahlweise über eine dritte Kupplung auf ein Hohlrad des Planetengetriebes koppelbar ist.

Vorteilhafte Weiterbildungen des Erfindungsgegenstandes sind den zugehörigen Unteransprüchen zu entnehmen.

Das erfindungsgemäße Getriebe kann mittel- oder unmittelbar von mindestens einem Antriebsmotor, insbesondere einer Brennkraftmaschine, über eine mit mindestens einer Kupplung versehene Antriebswelle angetrieben werden, die mittel- oder unmittelbar wahlweise entweder auf das Sonnenrad des Planetengetriebes geschaltet oder wahlweise kraftunschlüssig geschaltet werden kann, wobei das Planetengetriebe wahlweise über mindestens zwei Kupplungen in einen Zwanglauf geschaltet werden kann. Unter einem Zwanglauf versteht der Fachmann einen Zustand, bei welchem die Bewegung einer der drei Wellen des Planetengetriebes die Bewegung der beiden restlichen Wellen des Planetengetriebes definiert. In der Getriebelehre wird dies nach der "Grüblerschen Gleichung" auch mit dem Laufgrad F=1 beschrieben.

Die im Bereich des Leistungsverzweigungsgetriebes vorgesehenen Kupplungen/Bremsen, können so betätigt werden, dass das Getriebe wahlweise
- rein hydraulisch mit abgeschalteter mechanischer Antriebswelle
- leistungsverzweigt, d.h. hydraulisch angetrieben und mit mechanisch zugeschalteter Antriebswelle
- rein mechanisch bei wahlweise geschaltetem Zwanglauf des Planetengetriebes und/oder bei wahlweiser Abschaltung des hydrostatischen Leistungszweiges
betrieben werden kann.

Einem Gedanken der Erfindung gemäß ist eine Welle, die vorteilhafterweise als Gelenkwelle ausgebildet ist, unmittelbar vom Antriebsmotor antreibbar.

Darüber hinaus wird der einzelne Hydraulikmotor wahlweise auf das Sonnenrad und auf das Hohlrad gekoppelt.

Der Hydraulikmotor kann darüber hinaus über entsprechende Kupplungen vom Planetengetriebe abgekuppelt werden.

Des Weiteren wird vorgeschlagen, dass der Hydraulikmotor im abgekoppelten Zustand dadurch in den Stillstand versetzt wird, dass die Hydraulikpumpe auf den Fördervolumenstrom Q = 0 l/min geregelt wird.

Von besonderem Vorteil ist, wenn der Hydraulikmotor und/oder die Hydraulikpumpe innerhalb des Gehäuses angeordnet ist. Dadurch wird eine extrem raumsparende Bauweise des erfindungsmäßen Leistungsverzweigungsgetriebes herbeigeführt.

Der Erfindungsgegenstand schließt jedoch nicht aus, dass der Hydraulikmotor und/oder die Hydraulikpumpe auch außerhalb des Gehäuses positioniert sein kann, sofern die Einbauverhältnisse, innerhalb eines Fahrzeuges, beispielsweise eines Radladers, dies zu lassen.

Ist der Hydraulikmotor und/oder die Hydraulikpumpe innerhalb des Gehäuses angeordnet, wird, einem weiteren Gedanken der Erfindung gemäß, vorgeschlagen, den Hydraulikmotor und/oder die Hydraulikpumpe ohne eigenen Gehäusekörper auszubilden. Die beweglichen Antriebselemente des Hydraulikmotors und/oder der Hydraulikpumpe können daher - zur Vermeidung von Planschverlusten-außerhalb eines Gehäuseölsumpfes positioniert werden. Die bei einem Gehäuse für einen Hydraulikmotor und/oder eine Hydraulikpumpe notwendigerweise vorgesehenen Leckölanschlüsse zur Kühlung der beweglichen Antriebselemente sind nunmehr entbehrlich, da Öl aus dem Gehäuseölsumpf verwendet werden kann, mittels welchem die beweglichen Antriebselemente des gehäuselosen Hydraulikmotors und/oder der Hydraulikpumpe angespritzt werden. Durch Vermeidung von Planschverlusten kann eine nicht unerhebliche Erhöhung des Gesamtwirkungsgrades des Leistungsverzweigungsgetriebes herbeigeführt werden.

Einem weiteren Gedanken der Erfindung gemäß kann der weitere (mechanische) Leistungszweig leistungsadaptiv und/oder drehzahladaptiv und/oder beschleunigungsadaptiv über eine zugehörige Kupplung auf das Sonnenrad geschaltet werden.

Darüber hinaus wird vorgeschlagen, dass der weitere (mechanische) Leistungszweig dergestalt auf das Sonnenrad schaltbar ist, dass der Verbrennungsmotor verbrauchsoptimiert betrieben werden kann.

Ebenfalls denkbar ist, dass der Hydraulikmotor leistungsadaptiv und/oder drehzahladaptiv und/oder beschleunigungsadaptiv über eine Kupplung auf das Sonnenrad schaltbar ist.

Des Weiteren kann es in bestimmten Betriebsbereichen des Fahrzeugs sinnvoll sein, den Hydraulikmotor leistungsadaptiv und/oder drehzahladaptiv und/oder beschleunigungsadaptiv über eine Kupplung auf das Hohlrad zu schalten.

Da mit dem erfindungsgemäßen Leistungsverzweigungsgetriebe ausgerüstete Fahrzeuge, wie beispielsweise Radlader, Dumper, Trecker oder dergleichen, nicht immer nur vorwärts fahren, wird vorgeschlagen, im Bereich der Antriebswelle eine Reversierstufe vorzusehen, die über eine Kupplung die Drehrichtung des Sonnenrades umkehrt.

Einem weiteren Gedanken der Erfindung gemäß ist der Hydraulikmotor durch einen Verstellmotor und die Hydraulikpumpe durch eine Verstellpumpe gebildet.

Von Vorteil kann auch sein, wenn die Hydraulikpumpe mittel- oder unmittelbar vom Antriebsmotor angetrieben wird.

Darüber hinaus wird vorgeschlagen, dass das Hohlrad des Planetengetriebes über eine Bremse festsetzbar ist, wobei der Steg des Planetengetriebes mittel- oder unmittelbar mit der Abtriebswelle verbunden ist.

Der Erfindungsgegenstand ist anhand eines Ausführungsbeispiels in der Zeichnung dargestellt und wird wie folgt beschrieben. Es zeigen:

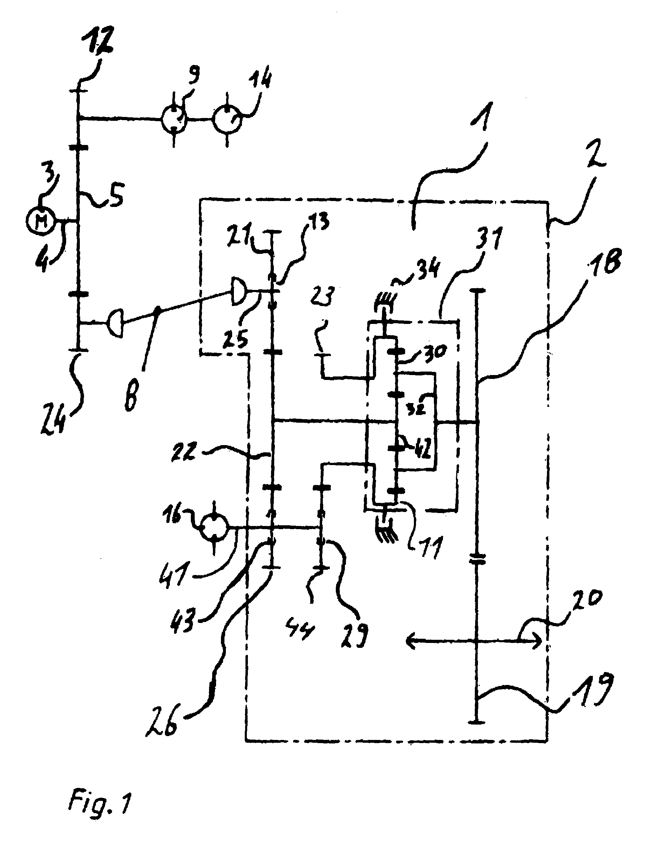

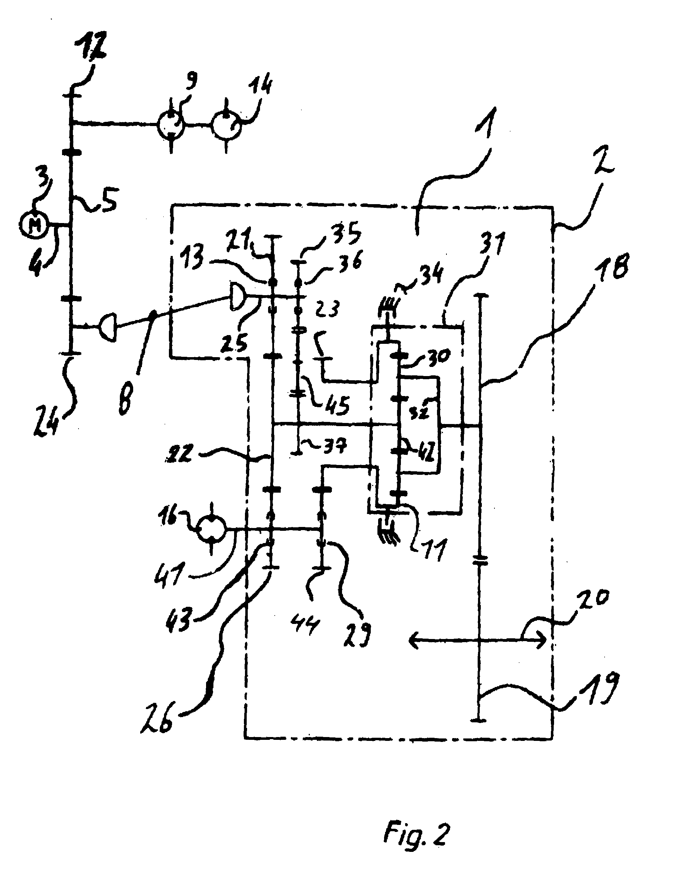

- Figuren 1 und 2: Prinzipskizzen des erfindungsgemäßen hydrostatisch mechanischen Leistungsverzweigungsgetriebes mit unterschiedlichem Aufbau der Antriebselemente.

Die Figuren 1 und 2 zeigen Prinzipskizzen des erfindungsgemäßen Leistungsverzweigungsgetriebes 1 mit unterschiedlichem Aufbau der Antriebselemente.

Das Leistungsverzweigungsgetriebe 1 gemäß Figur 1 beinhaltet ein Gehäuse 2, das über eine in diesem Beispiel als Gelenkwelle ausgebildete Welle 8 mechanisch angetrieben wird. Ein als Brennkraftmaschine ausgebildeter Antriebsmotor 3 treibt dabei eine Antriebswelle 4 an, auf der ein Zahnradelement 5 unmittelbar befestigt ist und mit einem weiteren Zahnradelement 24 kämmt, das wiederum die Welle 8 antreibt. Das Zahnradelement 5 steht darüber hinaus mit einem Zahnrad 12 in Wirkverbindung, wobei die Zahnradelemente 5, 12, die Hydraulikpumpen 9 und 14 und die als Verstellpumpe ausgebildete Hydraulikpumpe 9 den am Leistungsverzweigungsgetriebe 1, respektive dessen Gehäuse 2, montierten, als Verstellmotor ausgebildeten, Hydraulikmotor 16 antreibt.

Der Hydraulikmotor 16 kann zur Reduzierung des Bauraumes auch innerhalb des Gehäuses 2 angeordnet und in dieser Bauform als gehäuseloser Hydraulikmotor 16 eingesetzt werden.

Innerhalb des Leistungsverzweigungsgetriebes 1, respektive dessen Gehäuse 2, befindet sich ein Planetengetriebe 31, im Wesentlichen bestehend aus Hohlrad 11, Planeten 30, Sonnenrad 42 und einem Steg 32. Weiterhin beinhaltet das Leistungsverzweigungsgetriebe 1, respektive dessen Gehäuse 2, die Antriebswelle 41 für einen hydrostatischen Betrieb über den Hydraulikmotor 16.

In der Phase eines ersten Fahrbereichs mit üblicherweise niedrigen Geschwindigkeiten und hohem Zugkraft- bzw. Drehmomentbedarf treibt der Hydraulikmotor 16 auf das Sonnenrad 42, wobei eine Bremse 34 kraftschlüssig geschaltet wird, um das Hohlrad 11 gegen das Gehäuse 2 zu klemmen, während eine weitere Kupplung 29 geöffnet und eine weitere Kupplung 43 geschlossen wird. In diesem Betriebszustand treibt der Hydraulikmotor 16 über die Zahnräder 26,22 das Sonnenrad 42 an, so dass über den Steg 32 die Zahnräder 18,19 die Abtriebswelle 20 antreiben. In diesem Betriebszustand ist die gleichfalls im Leistungsverzweigungsgetriebe 1 eingebrachten Kupplungen 13 geöffnet, so dass kein mechanischer Leistungsfluss über die Welle 8 bzw. die Antriebswelle 25, z.B. eine Gelenkwelle, auf das ebenfalls im Leistungsverzweigungsgetriebe 1 vorhandene Zahnrad 22 erfolgen kann. In diesem ersten Fahrbereich, mit niedrigen Geschwindigkeiten und hohem Zugkraft- bzw. Drehmomentbedarf, wird das hohe Drehmomentvermögen der Hydrostaten 9,16 ausgenutzt, sowie deren Möglichkeit der hohen Kraftentfaltung auch bei Drehzahlen im Bereich von n = 0 U/min. Die gute Regelbarkeit der Hydrostaten 9,16 erlaubt es dabei, den Antriebsmotor 3 drehzahl- und leistungsoptimiert zu betreiben.

Aus diesem Grund treten die bekannten Wirkungsgradnachteile der Hydrostatik, im Vergleich zur Mechanik, im Sinne einer gesamtheitlichen Betrachtung für niedrige Geschwindigkeiten innerhalb dieses ersten Geschwindigkeitsbereiches in den Hintergrund. Bei Erreichen einer hinreichend hohen Drehzahl des Sonnenrades 42 bzw. des Zahnrades 22, wird in diesem ersten Fahrbereich der mechanische Leistungszweig 3 über die Kupplung 13 auf die Zahnräder 21,22 geschaltet und der hydrostatische Leistungszweig 9,16 wird über die Deaktivierung der Kupplung 43 abgeschaltet. In diesem Betriebszustand wird also bereits der erste Fahrbereich das Leistungsverzweigungsgetriebe 1 rein mechanisch betrieben. Zur Erhöhung der Wirkungsgrade wird dabei, abhängig von der benötigten Leistung bzw. des benötigten Drehmoments, der Hydraulikmotor 16 über die Kupplung 43 zur Vermeidung von Schleppverlusten abgeschaltet und stillgesetzt.

Mit steigender Fahrzeuggeschwindigkeit und daraus resultierendem eingeschränkten Zugkraft- bzw. Drehmomentbedarf wird das hohe Drehmomentvermögen der Hydrostaten 9,16 stetig weniger benötigt, so dass die Hydrostaten 9,16 abhängig von der aktuellen Geschwindigkeit, zurückgeregelt und entkoppelt werden können. Dabei wird zunächst im mittleren Geschwindigkeitsbereich eine Phase der hydrostatisch-mechanischen Leistungsverzweigung eingestellt und im hohen Geschwindigkeitsbereich wird, zur Optimierung der Wirkungsgrade, in einen ausschließlich mechanischen Betrieb übergegangen.

Im mittleren Geschwindigkeitsbereich wird die Leistungsverzweigung zur optimalen Drehzahl- und/oder Leistungseinstellung des Antriebsmotors 3 eingestellt, indem die Bremse 34 und eine weitere Kupplung 43 gelöst sowie die Kupplung 13 und die Kupplung 29 geschlossen werden. In diesem Betriebszustand wird die Leistung des Antriebsmotors 3 einerseits über den mechanischen Strang Antriebswelle 4, Zahnradelemente 5 und 24, Welle 8 und Antriebswelle 25, Kupplung 13 und Zahnrad 22 auf das Sonnenrad 42 des Planetengetriebes 31 geleitet und anderseits wird Leistung des Antriebsmotors 3 hydrostatisch über die Hydraulikpumpe 9 gewandelt und auf den Hydraulikmotor 16 geleitet, wobei der Hydraulikmotor 16 nun das Hohlrad 11 über Welle 41, Kupplung 29, Zahnrad 44 und Zahnrad 23 antreibt. Die Leistung des mechanischen. Stranges und die hydrostatische Leistung werden dabei im Planetengetriebe 31 summiert und auf den Steg 32 geleitet. Die Drehzahlen des Hohlrades 11 und des Sonnenrades 42 werden hierbei nach Art eines Überlagerungsgetriebes addiert und die Summe beider Drehzahlen ergibt die Planetengetriebe-Ausgangsdrehzahl am Steg 32, die direkt proportional die Drehzahl der Abtriebswelle 20 bzw. die daraus resultierende Fahrzeuggeschwindigkeit bestimmt. Die Einstellung der Drehzahl des Hohlrades 11 wird dabei über den gut regelbaren Hydraulikmotor 16 so vorgenommen, dass mit Blick auf die erforderliche Fahrzeuggeschwindigkeit, die Drehzahl des Sonnenrades 42 und damit die direkt proportionale Drehzahl des Antriebsmotors 3 im CVT-Betrieb (Continous Variable Transmission) wirkungsgrad- und/oder leistungsoptimal eingestellt wird.

Im letzten und hohen Geschwindigkeitsbereich wird ausschließlich mechanisch angetrieben, indem die Hydrostaten 9,16 leistungsmäßig gegen P = 0 kW gesteuert werden und das Planetengetriebe 31 komplett über die Kupplungen 29 und 43 in einen Zwanglauf versetzt wird. In diesem Betriebsfall wird die Hydraulikpumpe 9 nicht für das Fahren eingesetzt und wahlweise zur Vermeidung von Schleppverlusten über eine nicht dargestellte. Kupplung abgekoppelt.

Figur 2 zeigt eine andere Konfiguration der Antriebselemente, wobei die Fahrbereiche in gleicher Weise erfolgen, wie in Figur 1 beschrieben. Zur Realisierung der Rückwärtsfahrt mit dem mechanischem Pfad wird aber zusätzlich eine Reversierstufe, bestehend aus einem Zahnrad 35, einer Kupplung 36 sowie Zahnrädern 45,37, im Bereich der Antriebswelle 25 vorgesehen, um die Drehrichtung der Antriebswelle wahlweise zu ändern.

**Bezugszeichenliste**

| | | | |
|---|---|---|---|
| 1 | Leistungsverzweigungsgetriebe | | |
| 2 | Gehäuse | | |
| 3 | Antriebsmotor (Brennkraftmaschine) | 29 | Kupplung |
| 4 | Antriebswelle | 30 | Planet |
| 5 | Zahnradelement | 31 | Planetengetriebe |
| | | 32 | Steg |
| 8 | Welle (Gelenkwelle) | 34 | Bremse |
| 9 | Hydraulikpumpe | 35 | Zahnrad |
| | | 36 | Kupplung |
| 11 | Hohlrad | 37 | Zahnrad |
| 12 | Zahnrad | | |
| 13 | Kupplung | | |
| 14 | Hydraulikpumpe | | |
| | | 41 | Abtriebswelle |
| 16 | Hydraulikmotor | 42 | Sonnenrad |
| | | 43 | Kupplung |
| 18 | Zahnrad | 44 | Zahnrad |
| 19 | Zahnrad | 45 | Zahnrad |
| 20 | Abtriebswelle | | |
| 21 | Zahnrad | | |
| 22 | Zahnrad | | |
| 23 | Zahnrad | | |
| 24 | Zahnradelement | | |
| 21/22 | Zahnradstufe | | |
| 19/18 | Zahnradstufe | | |
| 25 | Antriebswelle | | |
| 26 | Zahnrad | | |

## Patentansprüche

1. Hydrostatisch mechanisches Leitungsverzweigungsgetriebe, beinhaltend ein Gehäuse (2), mindestens einen, aus mindestens einer Hydraulikpumpe (9) und mindestens einem Hydraulikmotor (16) bestehenden ersten Leistungszweig, mindestens eine innerhalb des Gehäuses (2) angeordnete von mindestens einem Antriebsmotor, insbesondere einer Brennkraftmaschine (3) als weiteren Leistungszweig, mittel- oder unmittelbar antreibbare Antriebswelle (25), die über Zahnradelemente (21,22) verfügt, **dadurch gekennzeichnet, dass** die Zahnradelemente (21, 22) über mindestens eine erste Kupplung (13) wahlweise entweder mittel- oder unmittelbar auf ein Sonnenrad (42) eines Planetengetriebes (31) wirken, wobei die Antriebswelle (25) vom Planetengetriebe (31) entkoppelt werden kann, wobei das Planetengetriebe (31) abhängig vom jeweiligen Betriebszustand des Leistungsverzweigungsgetriebes (1) über weitere Kupplungen (29, 43) in einen Zwanglauf schaltbar ist, und wobei der Hydraulikmotor (16) wahlweise über eine zweite Kupplung (43) auf das Sonnenrad (42) und wahlweise über eine dritte Kupplung (29) auf ein Hohlrad (11) des Planetengetriebes (31) koppelbar ist.

2. Leitungsverzweigungsgetriebe nach Anspruch 1 **dadurch gekennzeichnet, dass** eine Welle (8) direkt, d.h. unmittelbar vom Antriebsmotor (3), antreibbar ist.

3. Leitungsverzweigungsgetriebe nach Anspruch 2, **dadurch gekennzeichnet, dass** die Welle (8) als Gelenkwelle gestaltet ist.

4. Leitungsverzweigungsgetriebe nach einem der Ansprüche 1 bis 3, **dadurch gekennzeichnet, dass** der Hydraulikmotor (16) vom Planetengetriebe (31) abkoppelbar ist.

5. Leitungsverzweigungsgetriebe nach einem der Ansprüche 1 bis 4, **dadurch gekennzeichnet, dass** der Hydraulikmotor (16) im abgekoppelten Zustand dadurch in den Stillstand versetzbar wird, dass die Hydraulikpumpe (9) auf den Fördervolumenstrom Q=0 l/min eingestellt wird.

6. Leitungsverzweigungsgetriebe nach einem der Ansprüche 1 bis 5, **dadurch gekennzeichnet, dass** der Hydraulikmotor (16) innerhalb des Gehäuses (2) angeordnet ist.

7. Leitungsverzweigungsgetriebe nach einem der Ansprüche 1 bis 6, **dadurch gekennzeichnet, dass** der innerhalb des Gehäuses (2) angeordnete Hydraulikmotor (16) keinen eigenen Gehäusekörper aufweist.

8. Leitungsverzweigungsgetriebe nach einem der Ansprüche 1 bis 7, **dadurch gekennzeichnet, dass** die beweglichen Antriebselemente des Hydraulikmotors (16), zur Vermeidung von Planschverlusten, außerhalb eines Gehäuseölsumpfes angeordnet sind.

9. Leitungsverzweigungsgetriebe nach einem der Ansprüche 1 bis 8, **dadurch gekennzeichnet, dass** der weitere Leistungszweig leistungsadaptiv und/oder drehzahladaptiv und/oder beschleunigungsadaptiv über die erste Kupplung (13) auf das Sonnenrad (42) schaltbar ist.

10. Leitungsverzweigungsgetriebe nach einem der Ansprüche 1 bis 9, **dadurch gekennzeichnet, dass** der weitere Leistungszweig dergestalt auf das Sonnenrad (42) schaltbar ist, dass der Verbrennungsmotor (3) verbrauchsoptimiert betrieben wird.

11. Leitungsverzweigungsgetriebe nach einem der Ansprüche 1 bis 10, **dadurch gekennzeichnet, dass** der Hydraulikmotor (16) leistungsadaptiv und/oder drehzahladaptiv und/oder beschleunigungsadaptiv über die zweite Kupplung (43) auf das Sonnenrad (42) schaltbar ist.

12. Leitungsverzweigungsgetriebe nach einem der Ansprüche 1 bis 11, **dadurch gekennzeichnet, dass** der Hydraulikmotor (16) leistungsadaptiv und/oder drehzahladaptiv und/oder beschleunigungsadaptiv über die dritte Kupplung (29) auf das Hohlrad (11) schaltbar ist.

13. Leitungsverzweigungsgetriebe nach einem der Ansprüche 1 bis 12, **dadurch gekennzeichnet, dass** im Bereich der Antriebswelle (25) eine Reversierstufe angeordnet ist, die über eine vierte Kupplung (36) die Drehrichtung des Sonnenrades (42) umkehrt.

14. Leistungsverzweigungsgetriebe nach einem der Ansprüche 1 bis 13, **dadurch gekennzeichnet, dass** der Hydraulikmotor (16) durch einen Verstellmotor und die Hydraulikpumpe (9) durch eine Verstellpumpe gebildet ist.

15. Leistungsverzweigungsgetriebe nach einem der Ansprüche 1 bis 14, **dadurch gekennzeichnet, dass** die Hydraulikpumpe (9) mittel- oder unmittelbar vom Antriebsmotor (3) antreibbar ist.

16. Leistungsverzweigungsgetriebe nach einem der Ansprüche 1 bis 15, **dadurch gekennzeichnet, dass** das Hohlrad (11) des Planetengetriebes (31) über eine Bremse (34) festsetzbar ist.

17. Leistungsverzweigungsgetriebe nach einem der Ansprüche 1 bis 16, **dadurch gekennzeichnet, dass** ein Steg (32) des Planetengetriebes (31) mittel- oder unmittelbar mit einer Abtriebswelle (20) verbunden ist.

## Claims

1. A hydrostatic mechanical power-split transmission, comprising a housing (2), at least one first power branch consisting of at least one hydraulic pump (9) and at least one hydraulic motor (16), at least one drive shaft (25) which is arranged inside the housing (2) and can be directly or indirectly driven by at least one drive motor, in particular an internal combustion engine (3) as further power branch, which drive shaft (25) comprises gear wheel elements (21, 22), **characterized in that** the gear wheel elements (21, 22) optionally act either directly or indirectly on a sun wheel (42) of a planetary gear (31) via at least one first clutch (13), wherein the drive shaft (25) can be decoupled from the planetary gear (31), wherein the planetary gear (31) can be changed into a constrained motion via other clutches (29, 43) dependent on the respective operating condition of the power-split transmission (1), and wherein the hydraulic motor (16) can be optionally coupled to the sun wheel (42) via a second clutch (43) and optionally to a ring gear (11) of the planetary gear (31) via a third clutch (29).

2. A power-split transmission according to claim 1, **characterized in that** a shaft (8) can be directly driven by the drive motor (3).

3. A power-split transmission according to claim 2, **characterized in that** the shaft (8) is designed as a cardan shaft.

4. A power-split transmission according to one of the claims 1 through 3, **characterized in that** the hydraulic motor (16) can be decoupled from the planetary gear (31).

5. A power-split transmission according to one of the claims 1 through 4, **characterized in that** in the decoupled state the hydraulic motor (16) can be brought to a standstill by setting the hydraulic pump (9) to the volume flow Q = 0 l/min.

6. A power-split transmission according to one of the claims 1 through 5, **characterized in that** the hydraulic motor (16) is arranged inside the housing (2).

7. A power-split transmission according to one of the claims 1 through 6, **characterized in that** the hydraulic motor (16) arranged inside the housing (2) does not comprise any own housing body.

8. A power-split transmission according to one of the claims 1 through 7, **characterized in that** the mobile drive elements of the hydraulic motor (16) are arranged outside a housing oil sump for avoiding splash losses.

9. A power-split transmission according to one of the claims 1 through 8, **characterized in that** the other power branch can be shifted via the first clutch (13) to the sun wheel (42) in a power adapting and/or speed adapting and/or acceleration adapting manner.

10. A power-split transmission according to one of the claims 1 through 9, **characterized in that** the other power branch can be shifted to the sun wheel (42) in such a way that the combustion engine will be operated in a consumption-optimized manner.

11. A power-split transmission according to one of the claims 1 through 10, **characterized in that** the hydraulic motor (16) can be shifted via the second clutch (43) to the sun wheel (42) in a power adapting and/or speed adapting and/or acceleration adapting manner.

12. A power-split transmission according to one of the claims 1 through 11, **characterized in that** the hydraulic motor (16) can be shifted via the third clutch (29) to the ring gear (11) in a power adapting and/or speed adapting and/or acceleration adapting manner.

13. A power-split transmission according to one of the claims 1 through 12, **characterized in that** a reversing stage is arranged in the area of the drive shaft (25), which reversing stage reverses the direction of rotation of the sun wheel (42) via a fourth clutch (36).

14. A power-split transmission according to one of the claims 1 through 13, **characterized in that** the hydraulic motor (16) is formed by a variable displacement motor and the hydraulic pump (9) is formed by a variable displacement pump.

15. A power-split transmission according to one of the claims 1 through 14, **characterized in that** the hydraulic pump (9) can be directly or indirectly driven by the drive motor (3).

16. A power-split transmission according to one of the claims 1 through 15, **characterized in that** the ring gear (11) of the planetary gear (31) can be fixed by a brake (34).

17. A power-split transmission according to one of the claims 1 through 16, **characterized in that** a web (32) of the planetary gear (31) is directly or indirectly connected to an output shaft (20).

## Revendications

1. Transmission à dérivation de puissance hydrostatique et mécanique, comprenant un boîtier (2), au moins une première branche de puissance composée d'au moins une pompe hydraulique (9) et d'au moins un moteur hydraulique (16) et au moins un arbre d'entraînement (25) disposé à l'intérieur du boîtier (2) et susceptible d'être directement ou indirectement entraîné par au moins un moteur d'entraînement, notamment un moteur à combustion interne (3) comme une autre branche de puissance, l'arbre d'entraînement (25) comprenant des éléments d'engrenage (21, 22), **caractérisée en ce que** les éléments d'engrenage (21, 22) sélectivement agissent directement ou indirectement sur une roue planétaire (42) d'un engrenage planétaire (31) via au moins un premier embrayage (13), l'arbre d'entraînement (25) étant susceptible d'être découplé de l'engrenage planétaire (31), l'engrenage planétaire (31) étant susceptible d'être passé à un mouvement contraint par d'autres embrayages (29, 43) en fonction de l'état de fonctionnement respectif de la transmission à dérivation de puissance (1), et le moteur hydraulique (16) étant sélectivement susceptible d'être couplé à la roue planétaire (42) par un deuxième embrayage (43) et sélectivement à une couronne (11) de l'engrenage planétaire (31) par un troisième embrayage (29).

2. Transmission à dérivation de puissance selon la revendication 1, **caractérisée en ce qu'**un arbre (8) peut directement être entraîné par le moteur d'entraînement (3).

3. Transmission à dérivation de puissance selon la revendication 2, **caractérisée en ce que** l'arbre (8) est configuré comme un arbre à cardan.

4. Transmission à dérivation de puissance selon l'une des revendications 1 à 3, **caractérisée en ce que** le moteur hydraulique (16) est susceptible d'être découplé de l'engrenage planétaire (31).

5. Transmission à dérivation de puissance selon l'une des revendications 1 à 4, **caractérisée en ce qu'**en état découplé le moteur hydraulique (16) peut être immobilisé en réglant le flux volumique de la pompe hydraulique (9) à Q = 0 l/min.

6. Transmission à dérivation de puissance selon l'une des revendications 1 à 5, **caractérisée en ce que** le moteur hydraulique (16) est disposé à l'intérieur du boîtier (2).

7. Transmission à dérivation de puissance selon l'une des revendications 1 à 6, **caractérisée en ce que** le moteur hydraulique (16) disposé à l'intérieur du boîtier (2) ne comprend aucun propre corps de boîtier.

8. Transmission à dérivation de puissance selon l'une des revendications 1 à 7, **caractérisée en ce que** les éléments d'entraînement mobiles du moteur hydraulique (16) sont disposés à l'extérieur d'un carter d'huile de boîtier pour éviter des pertes par éclaboussures.

9. Transmission à dérivation de puissance selon l'une des revendications 1 à 8, **caractérisée en ce que** l'autre branche de puissance peut être passée par le premier embrayage (13) à la roue planétaire (42) de manière à adapter la puissance et/ou à adapter la vitesse de rotation et/ou à adapter l'accélération.

10. Transmission à dérivation de puissance selon l'une des revendications 1 à 9, **caractérisée en ce que** l'autre branche de puissance peut être passée à la roue planétaire (42) de façon que le moteur à combustion interne (3) soit exploité avec une consommation optimisée.

11. Transmission à dérivation de puissance selon l'une des revendications 1 à 10, **caractérisée en ce que** le moteur hydraulique (16) peut être passé par le deuxième embrayage (43) à la roue planétaire (42) de manière à adapter la puissance et/ou à adapter la vitesse de rotation et/ou à adapter l'accélération.

12. Transmission à dérivation de puissance selon l'une des revendications 1 à 11, **caractérisée en ce que** le moteur hydraulique (16) peut être passé par le troisième embrayage (29) à la couronne (11) de manière à adapter la puissance et/ou à adapter la vitesse de rotation et/ou à adapter l'accélération.

13. Transmission à dérivation de puissance selon l'une des revendications 1 à 12, **caractérisée en ce qu'**une étape d'inversion est disposée au niveau de l'arbre d'entraînement (25), laquelle étape d'inversion inverse la direction de rotation de la roue planétaire (42) par un quatrième embrayage (36).

14. Transmission à dérivation de puissance selon l'une des revendications 1 à 13, **caractérisée en ce que** le moteur hydraulique (16) est formé par un moteur de déplacement et la pompe hydraulique (9) est formée par une pompe de déplacement.

15. Transmission à dérivation de puissance selon l'une des revendications 1 à 14, **caractérisée en ce que** la pompe hydraulique (9) peut être directement ou indirectement entraînée par le moteur d'entraînement (3).

16. Transmission à dérivation de puissance selon l'une des revendications 1 à 15, **caractérisée en ce que** la couronne (11) de l'engrenage planétaire (31) peut être arrêtée par un frein (34).

17. Transmission à dérivation de puissance selon l'une des revendications 1 à 16, **caractérisée en ce qu'**une entretoise (32) de l'engrenage planétaire (31) est directement ou indirectement reliée à un arbre de sortie (20).
